# EUROPEAN PATENT SPECIFICATION

(11) **EP 0 368 411 B1**
(45) Date of publication and mention of the grant of the patent: **14.09.1994**
(21) Application number: 89202804.4
(22) Date of filing: 06.11.1989
(51) Int. Cl.: A01J 25/11

(54) **Apparatus for preparing a curd mass**
Gerät zum Herstellen von Käsebruch
Appareil pour la production de caillé

(30) Priority: 08.11.1988 NL 8802738
(43) Date of publication of application: 16.05.1990
(73) Proprietor: TEBEL-MKT B.V., NL-8912 AV Leeuwarden (NL)
(72) Inventor: Yntema, Everardus Gerhard Maria, NL-8701 LM Bolsward (NL)
(74) Representative: Winckels, Johannes Hubertus Franciscus

(56) References cited:
- WO-A-88/07322
- FR-A- 2 084 840
- NL-A- 7 315 742
- US-A- 3 982 480

## Description

The invention relates to an apparatus for preparing a curd mass by draining a mixture of whey and curds, comprising an upright column consisting of at least one permeable sleeve and a tube surrounding the permeable sleeve or sleeves and leaving a free space between the tube and the sleeve or sleeves and further comprising means at one end of the column for feeding the mixture of whey and curds and means at the other end of the column for receiving and discharging a drained and extruded curd mass, the free space between the sleeve or sleeves and the tube being subdivided into various compartments, lying one above the other, with the aid of sealing partitions, while each compartment is provided with inlet and outlet connections for whey or cleaning liquid.

Such an apparatus is known from NL-A-7315742. In cheese factories the column must from time to time be removed from the machine for inspection and cleaning purposes, or for replacement by another column. In the known apparatus the column is fixed. Removal of the column from the machine is very cumbersome and will take a long time.

It is the object of the invention to obviate this drawback.

This object is achieved by an apparatus of the abovementioned type which is characterized in that the sleeve or sleeves, the tube and the sealing partition are fixedly connected to one another so that the column constitutes an integral unit and in that the column is provided near the bottom rim of the tube with a flange which is detachably fastened on a worktable by means of clamp plates, while the outlet connections of the compartments are provided with quick-release couplings.

As a result of these measures, the removal and replacement of the column can be carried out quickly and in an easy manner.

WO-A-8807332 discloses an apparatus for forming blocks of cheese from prepared cheese curd comprising a hollow tower which is bolted to a hollow base. The tower is not detachable from the base in an easy manner. Moreover, the free space between the casing and the lining tube is not subdivided in compartments, which are provided inlet and outlet connections.

A preferred embodiment of the apparatus according to the invention is claimed in the dependent claim.

The apparatus according to the invention will be described with reference to the drawing, which shows some variants of this apparatus.

Figure 1 is a simplified side view of the apparatus.

Figure 2 is a horizontal section on the line II-II in Figure 1, with a permeable sleeve of cylindrical shape.

Figure 3 is a similar section to Figure 2 in the case where the tube contains in its interior three sleeves of rectangular shape.

Figure 4 is a horizontal section on the line IV-IV in Figure 1, showing the window construction on a larger scale, partly in section and in elevation.

Figure 5 shows on a considerably larger scale the detail V indicated in Figure 1.

Figure 6 shows on a larger scale the locating peg which is visible in the right-hand top half of Figure 2.

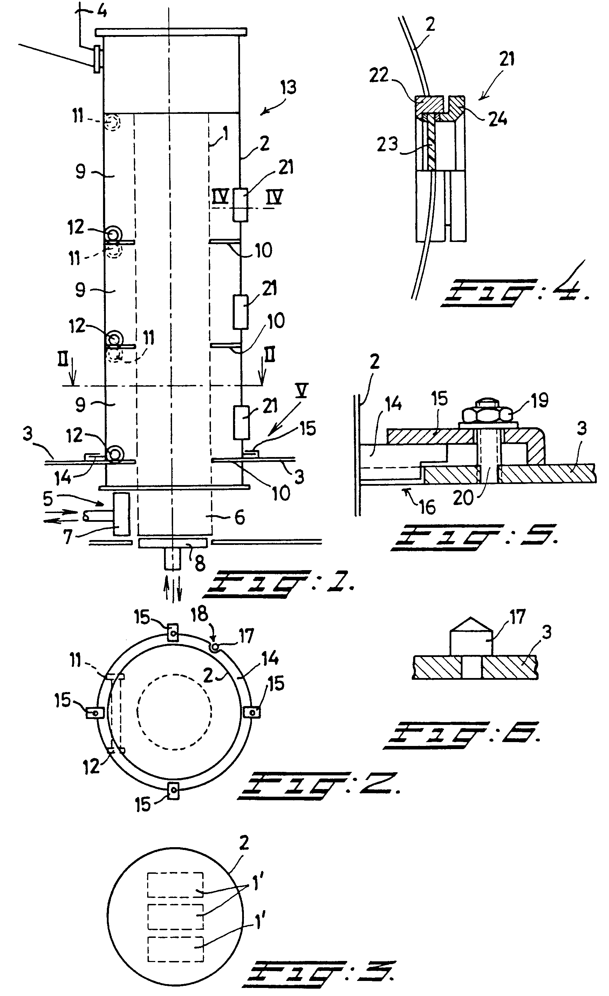

The apparatus shown in Figure 1 is composed of a permeable sleeve 1, which is contained, with some clearance, in a tube 2 mounted on a worktable 3. At the top end of the sleeve 1 and the tube 2, means 4 are provided for feeding a mixture of curds and whey. At the bottom end of the sleeve 1, in a region underneath the worktable 3, means 5 are provided for receiving and discharging a drained and extruded curd mass. As described in the related Netherlands Patent Application 88 02715, these means 5 consist of an auxiliary basket 6, a pusher member 7 and a plate 8. The free space between the sleeve 1 and the tube 2 is subdivided into various compartments 9, lying one above the other, with the aid of sealing partitions 10. Each compartment 9 is provided with connections 11, 12 for the admission and discharge of whey or cleaning liquid. The section in Figure 2 shows that a single cylindrical sleeve 1 may be disposed inside the tube 2, while in Figure 3 it can be seen that a plurality of sleeves 1', for example of rectangular shape, can be disposed inside the tube 2.

The sleeve 1 or the sleeves 1' situated inside a single tube 2 form a column 13 with the partitions 10 and with said tube. The column thus formed is detachably fastened on the worktable 3, while the connections 11, 12 of the compartments 9 are also provided with detachable couplings (not shown), for example of the type customary for pipe couplings. For this purpose, each assembly 13 is provided, near a rim of the tube 2, with a flange 14. With the aid of a plurality of pressure members 15, also known as clamp plates, this flange can be fastened on the worktable 3 (see Figure 5).

From Figures 1 and 5 it can be seen that the tube 2, which mainly lies above the worktable 3, also extends slightly underneath said table 3. For this purpose this table is provided with an opening 16, while the flange 14 has a downwardly directed thickened portion fitting into the opening 16. The correct position of the assembly 13, that is to say of the tube 2, on the worktable 3 is ensured by the presence on the worktable 3 of a locating peg 17, which can be seen in Figures 2 and 6 and which can be fitted into a recess 18 in the flange 14. Figure 2 shows the provision of four clamp plates 15, which are clamped with the aid of a nut 19 cooperating with a threaded pin 20.

A window structure 21 removable from the outside is provided in the wall of the tube 2 in each compartment 9 (see Figure 1). This structure is shown in greater detail in Figure 4 and consists of a groove 22, for example of circular shape, which is provided in its interior with a glass plate 23 to which pressure can be applied by a ring 24. With this window structure it is possible to follow the progress of the draining of the column of whey and curds contained in the sleeve 1, while during a cleaning phase (via the inlet and outlet 11 and 12 respectively) it is also possible to judge the condition inside each compartment 9.

The connections 11 and 12 in each compartment 9 lead out tangentially along the wall of the tube 2, this feature being of importance above all for the periodically required cleaning with the aid of sodium hydroxide solution or nitric acid. Cleaning of this kind is necessary in this type of machine because of the ever present threat of bacterial growth in dead corners and chinks in the compartments 9 in the column 13.

The detachability of the column 13, as described with reference to Figure 5, is connected to the desire of the user of the machine to change or inspect the sleeve 1 or sleeves 1'. These sleeves are relatively vulnerable because of their slight thickness (for example 0.8 millimetre), while a Teflon lining is also frequently provided on the inner wall of the sleeve. Hitherto this sleeve could be removed from said tube 2 only in the upward direction, which made it necessary to have sufficient free space above said tube. This tube length is frequently 2 metres and sometimes even 3 metres, so that a very high ceiling or roof structure is required. With the aid of the present proposal this requirement is now eliminated, and the detachment of the clamp plates 15 and quick-release couplings at the connections 11, 12 enables the entire column 13 to be lifted off the worktable 3 and then worked on in any desired position. When it is required to install a new column 13 in the vacant position on the worktable 3, the thickened portion of the flange 14 can be inserted into the opening 16 while at the same time the recess 18 in the flange 14 is positioned on the pin 17. The clamp plates 15 are then placed in position and fastened in the manner illustrated in Figure 5 by tightening the nuts 19.

## Claims

1. Apparatus for preparing a curd mass by draining a mixture of whey and curds, comprising an upright column (13) consisting of at least one permeable sleeve (1, 1') and a tube (2) surrounding the permeable sleeve or sleeves and leaving a free space between the tube and the sleeve or sleeves and further comprising means (4) at one end of the column for feeding the mixture of whey and curds and means (5) at the other end of the column for receiving and discharging a drained and extruded curd mass, the free space between the sleeve or sleeves and the tube being subdivided into various compartments (9), lying one above the other, with the aid of sealing partitions (10), while each compartment is provided with inlet and outlet connections (11, 12) for whey or cleaning liquid, characterized in that the sleeve or sleeves (1, 1'), the tube (2) and the sealing partitions (10) are fixedly connected to one another so that the column (13) constitutes an integral unit and in that the column (13) is provided near the bottom rim of the tube (2) with a flange (14) which is detachably fastened on a worktable (3) by means of clamp plates (15) while the outlet connections (11, 12) of the compartments (9) are provided with quick-release couplings.

2. Apparatus according to claim 1, characterized in that the site of the tube flange (14) the worktable (3) is provided with a locating peg (17) which fits into a recess (18) in the flange (14).

## Patentansprüche

1. Gerät zum Herstellen von Käsebruch durch Entwässern einer Mischung von Molke und Käsegerinnsel mit einer aufrechten Säule (13), die aus wenigstens einer durchlässigen Hülse (1, 1') und einem Rohr (2) besteht, das die Hülse oder Hülsen unter Belassen eines Freiraumes zwischen dem Rohr und der Hülse oder Hülsen umgibt, und mit an einem Ende der Säule angeordneten Mitteln (4) zum Zuführen der Mischung aus Molke und Käsegrinnsel sowie mit an dem anderen Ende der Säule angeordneten Mitteln (5) zur Aufnahme und Austragung des entwässerten und extrudierten Käsebruch, wobei der Freiraum zwischen der Hülse oder den Hülsen und dem Rohr in mehrere Abteile (9) unterteilt ist, die unter der Verwendung von Dichtungstrennwänden (10) übereinander liegen und jedes Abteil mit Einlaß- und Auslaßanschlüssen (11, 12) für Molke oder Reinigungsflüssigkeit versehen ist, dadurch **gekennzeichnet**, daß die Hülse oder Hülsen (1, 1'), das Rohr (2) und die Dichtungstrennwände (10) fest miteinander verbunden sind, so daß die Säule (13) eine zusammenhängende Einheit bildet, und daß die Säule in der Nähe des unteren Randes des Rohres (2) mit einem Flansch (14) versehen ist, der lösbar mittels Klemmplatten (15) auf einem Auflagetisch (3) befestigt ist, wobei die Auslaßanschlüsse (11, 12) der Abteile (9) mit Schnellauslöse-Kupplungen versehen sind.

2. Geräte nach Anspruch 1, dadurch gekennzeichnet, daß der Sitz des Rohrflansches (14) auf dem Auflagetisch (3) mit einem Paßstift (17) versehen ist, der in eine Aussparung (18) im Flansch (14) eingreift.

## Revendications

1. Dispositif pour la préparation d'une masse de caillé par drainage de petit-lait et de caillé, comprenant une colonne verticale (13) consistant en au moins un manchon perméable (1, 1') et un tube (2) entourant le(s) manchon(s) perméable(s) et laissant un espace libre entre le tube et le(s) manchon(s) et comprenant en outre des moyens (4) à l'une des extrémités de la colonne pour introduire le mélange de petit lait et de caillé et des moyens (5) à l'autre extrémité de la colonne pour la réception et l'évacuation d'une masse de caillé drainée et extrudée, l'espace libre entre le(s) manchon(s) et le tube étant subdivisé en plusieurs compartiments (9) situés l'un au-dessus de l'autre, à l'aide de cloisons d'étanchéité (10), chaque compartiment étant muni de conduits d'arrivée et de sortie (11, 12) pour le petit-lait ou le liquide de nettoyage, caractérisé en ce que le(s) manchon(s) (1, 1'), le tube (2) et les cloisons d'étanchéité (10) sont reliés de manière fixe les uns aux autres de sorte que la colonne (13) constitue une unité intégrée et en ce que la colonne (13) est munie à proximité du bord inférieur du tube (2) d'une bride (14) qui est fixée de manière amovible sur une table support (3) au moyen de taques de fixation (15), les conduits de sortie (11, 12) des compartiments (9) étant munis de raccords rapides.

2. Dispositif selon la revendication 1, caractérisé en ce que dans la zone de la bride (14) du tube, la table support (3) est munie d'un tenon (17) de positionnement qui s'insère dans une encoche (18) de la bride (14).
